Europäisches Patentamt

European Patent Office

Office européen des brevets

(11) Veröffentlichungsnummer: **0 032 372**
**B1**

(12) **EUROPÄISCHE PATENTSCHRIFT**

(45) Veröffentlichungstag der Patentschrift: **05.09.84**

(51) Int. Cl.³: **F 16 K 47/02**

(21) Anmeldenummer: **81100025.6**

(22) Anmeldetag: **05.01.81**

(54) Geräuschgedämmtes Mischventil.

(30) Priorität: **12.01.80 DE 3000990**

(43) Veröffentlichungstag der Anmeldung:
**22.07.81 Patentblatt 81/29**

(45) Bekanntmachung des Hinweises auf die
Patenterteilung:
**05.09.84 Patentblatt 84/36**

(84) Benannte Vertragsstaaten:
**AT BE CH FR GB IT LI LU NL**

(56) Entgegenhaltungen:
**AT-B- 324 234**
**DE-A-2 322 212**
**DE-A-2 356 211**
**DE-A-2 356 326**
**DE-A-2 356 327**
**DE-A-2 753 287**
**US-A-3 433 264**
**US-A-3 736 959**

(73) Patentinhaber: **Goswin GmbH & Co. KG**
**Baarstrasse 108-112**
**D-5860 Iserlohn (DE)**

(72) Erfinder: **Lemmer, Fritz**
**Klusensteiner Weg 3**
**D-5870 Hemer (DE)**
Erfinder: **Woitelle, Roland**
**Am Wernshagen 46**
**D-5870 Hemer (DE)**
Erfinder: **Kemker, Karl**
**Seilerblick 31**
**D-5860 Iserlohn (DE)**

(74) Vertreter: **Schröter, Martin, Dipl.-Ing.**
**Im Tückwinkel 22**
**D-5860 Iserlohn (DE)**

Courier Press, Leamington Spa, England.

## Beschreibung

Die Erfindung betrifft ein geräuschgedämmtes Mischenventil, insbesondere Einhebelmischer, mit in das Ventilgehäuse eingesetzter Steuerkartusche, die eine starr angeordnete Ventilsitzscheibe und mindestens eine darüber angeordnete Steuerscheibe aufweist, wobei im Ventilgehäuse zwischen dem Gehäuseboden und der Ventilsitzscheibe ein Geräuschdämmzwischenstück angeordnet ist, das einen Heißwasserzulaufkanal, einen Kaltwasserzulaufkanal und einen Ablaufkanal aufweist.

Aus der AT—B—324 234 ist ein solches geräuschgedämmtes Mischventil bekannt, bei dem zwischen dem Boden der Steuerkartusche und dem Boden des Ventilgehäuses eine elastische Isolierplatte als Geräuschdämmzwischenstück zwischengesetzt ist, die entsprechende Bohrungen als Heißwasserzulaufkanal, Kaltwasserzulaufkanal und Ablaufkanal aufweist. Eine solche Platte verhindert, daß in der Steuerkartusche auftretende Geräusche direkt auf den Gehäusekörper weitergeleitet werden. In der Regel entsteht jedoch der Schall, wenn sich der Querschnitt der Wasserströmung verändert. Er pflanzt sich in der Wasserströmung fort. In vielen Fällen geht er mit dem Auftreten von Kavitation einher. Bei dieser bekannten Konstruktion werden daher die an den Querschnittsänderungen entstehenden Schallgeräusche durch das strömende Wasser weitergeleitet und auf die angeschlossenen Rohrleitungen übertragen.

Zur Dämpfung von Geräuschen, die durch strömendes Wasser in Sanitärarmaturen erzeugt werden, ist es bekannt, Dämmelemente aus elastischen Materialien in die Wasserleitung einzubringen, bzw. auf der Gebäudewand zu installieren. Auch diese bekannten Maßnahmen führen nicht zu einer Schalldämmung in ausreichendem Maße.

Um die Schallentstehung direkt dort zu verhindern, wo die Querschnittsänderung auftritt, ist bei Ventilen, die durch aufeinandergleitende Platten den Wasserstrom steuern, bereits vorgeschlagen worden, Einbauten in die Mischkammer der Steuerscheibe des Ventiles einzubringen (DE—A—23 56 326).

Diese Einbauten bestehen im wesentlichen aus Sieben bzw. Siebpaketen, durch die das Wasser hindurchströmen muß, ehe es von Zulauf zum Ablauf gelangen kann. Der Nachteil solcher Siebe bzw. Siebpakete liegt darin, daß das normale Rohrleitungsnetz nie völlig frei von Verunreinigungen ist, so daß Rost- oder Schmutzablagerungen das Sieb nach kurzer Zeit unwirksam machen, so daß der Wasserdurchlauf stark behindert wird. Selbstreinigende Siebe (DE—A—2.753.287) erfordern größere Mischkammern, die das Ventil konstruktiv aufwendiger werden lassen. Jedoch auch diese Siebkonstruktionen neigen noch zur Verschmutzung.

Der Erfindung liegt die Aufgabe zugrunde, ein geräuschdämmtes Mischventil vorzuschlagen, bei der die Geräuschdammung in ausreichendem Maße unmittelbar hinter der Geräuschquelle erfolgt und die Schallfortpflanzung im Wasserstrom weitgehend verhindert wird.

Gelöst wird diese Erfindungsaufgabe mit einem geräuschgedämmten Mischventil der eingangs genannten Art, welches dadurch gekennzeichnet ist, daß in den Wasserzulaufkanälen und/oder im Wasserablaufkanal des Geräuschdämmzwischenstückes radial auffedernde Schlaucheinsätze angeordnet und jeweils zumindest bereichsweise von einer Luftkammer umgeben sind.

Infolge der auffedernden Schlaucheinsätze im separat eingesetzten oder an der Steuerkartusche angeformten Geräuschdämmzwischenstückes wird eine Geräuschfortpflanzung in den durch die Schlaucheinsätze fließenden Wasserströmen direkt hinter der Geräuschquelle verhindert. Der Schalldruck wird im Bereich dieser auffedernden Schlaucheinsätze, die von einer Luftkammer umgeben sind, aufgezehrt. Die innen glatten Schlaucheinsätze werden von evtl. vorhandenen Wasserverunreinigungen nicht beeinträchtigt, so daß solche Geräuschdämmzwischenstücke insoweit störungsfrei und wartungsfrei arbeiten.

Kautschukelastisches Material für die Schlaucheinsätze zeigt eine besonders gute Dämmwirkung.

Vorteilhalterweise sind die Schlaucheinsätze so ausgeführt, daß sie abdichtende Stirnflächen aufweisen. Die Einsätze durchdringen das Geräuschdämmzwischenstück voll in seiner ganzen Höhe und ragen geringfügig über die Stirnflächen hinaus. Sie können damit gleichzeitig eine Dichtung zwischen dem Kartuschenboden auf der einen Seite und dem Gehäuseboden auf der anderen Seite bilden. Zweckmäßig sind daher die Stirnflächen der Schlaucheinsätze als Dichtringe ausgebildet, so daß nicht die volle Stirnfläche, sodern lediglich ihr Rand abdichtet.

In weiterer Ausbildung der Erfindung weisen die Schlaucheinsätze außen Ansätze auf, die die den Schlaucheinsatz zumindest in seinem mittleren Bereich umgebende Luftkammer im Zwischenstück begrenzen.

Zur Erfindung gehört auch der Vorschlag, an den Schlaucheinsätzen außen Abstützdorne und/oder Abstützrippen vorzusehen, vorteilhafter Weise im Bereich der Luftkammer. Durch diese unregelmäßig verteiltel Dorne oder Rippen wird die Federwirkung des Schlaucheinsatzes bereichsweise verändert. Die Federwirkung kann daher den verschiedensten auftretenden Schallfrequenzen angepaßt werden.

Anhand eines abgebildeten Ausführungsbeispieles wird die Erfindung im folgenden näher erläutert. Es zeigen:

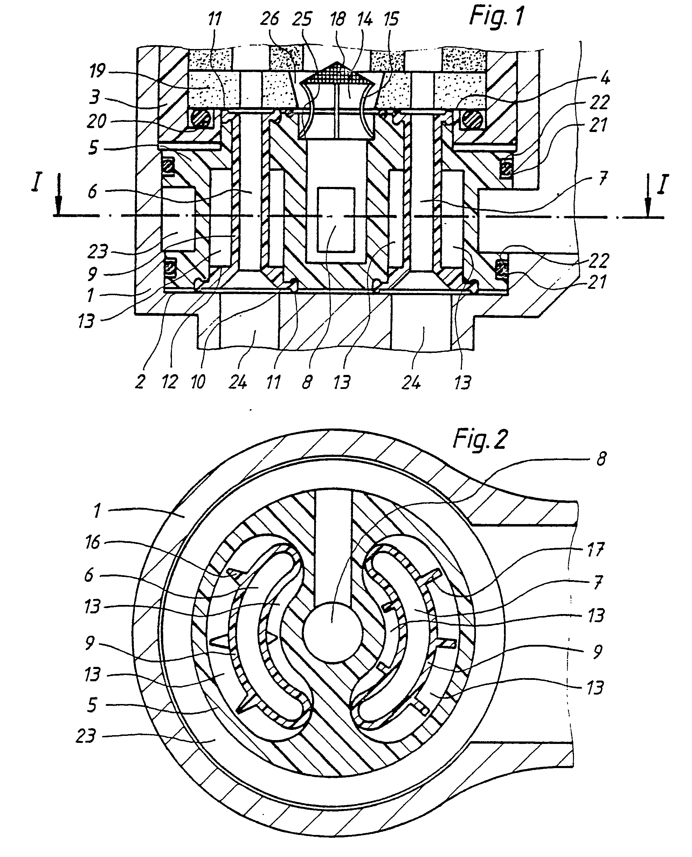

Figur 1 einen Längsschnitt durch den unteren Bereich des Gehäuses eines Mischventiles mit eingesetzter Kartusche und Geräuschdämmzwischenstück,

Figur 2 einen Schnitt durch das Geräuschdämmzwischenstück nach der Linie I—I in Figur
1 und

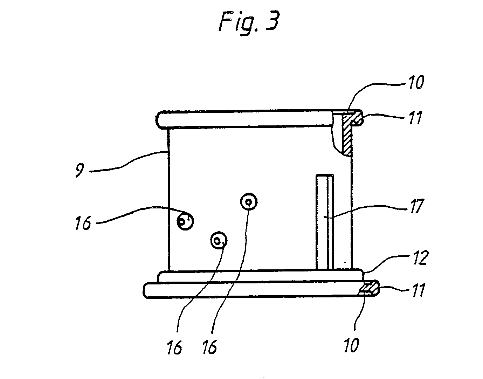

Figur 3 die Seitenansicht eines möglichen
Schlaucheinsatzes für das Geräuschdämmzwischenstück.

In das Ventilgehäuse 1 ist ein Geräuschdämmzwischenstück 5 eingesetzt, auf dem eine
Kartusche 3 ruht. Das Zwischenstück 5 steht
dabei in dichtendem Eingriff zwischen Gehäuseboden 2 und Kartuschenboden 4. Die Kartusche 3 ist mit Keramikdichtscheiben ausgestattet, dargestellt ist jedoch nur die Ventilsitzscheibe 19. Sie ist mittels eines Rundschnurringes 20 in der Kartusche 3 abgedichtet.

Das Geräuschdämmzwischenstück 5 ist ein
Kunststoffspritzteil, vorzugsweise aus Polyamid.
Es ist im wesentlichen zylinderförmig ausgeführt und trägt an seinem äußeren Bereich in
zwei Ringnuten 21 Dichtringe 22. Diese Dichtringe 22 dichten das Teil 5 im Bereich des
Ringkanales 23 gegen das Ventilgehäuse 1 ab.

In dem Geräuschdämmzwischenstück 5 bilden radial auffedernde Schlaucheinsätze 9 den
Heißwasserzulaufkanal 6 und den Kaltwasserzulauf 7. Im Wasserablauf 8 ist ein Siebeinsatz 14 vorgesehen.

Die Schlaucheinsätze 9, die vorzugsweise
aus kautschukelastischem Material bestehen,
weisen an ihren gegenüberliegenden Enden
Stirnflächen 10 auf, die jeweils in einen Dichtring 11 ausmünden. Dieser Dichtring 11 steht
unter Druckspannung mit den Wasserzulaufbohrungen 24 des Gehäusebodens 2 sowie den
entsprechenden Bohrungen in der Ventilsitzscheibe 19 in Verbindung.

Um die Schlaucheinsätze 9 heraum ist
jeweils eine Luftkammer 13 gebildet, die jeweils
stirnseitig durch einen Ansatz 12 am Schlaucheinsatz 9 verschlossen ist. Im Bereich dieser
Luftkammern 13 sind die Schlaucheinsätze 9
mit Abstützdornen 16 und/oder Abstützrippen
17 versehen, wobei diese Dorne und/oder
Rippen sowohl bis an die Außenwandung der
Luftkammer 13 heranreichen können als auch
zumindest teilweise in einem gewissen Abstand
davon angeordnet sind, so daß eine Berührung
zwischen der Wandung der Luftkammer 13 und
den Dornen bzw. Rippen erst dann erfolgt, wenn
der Schlaucheinsatz 9 mit einem bestimmten
Druck beaufschlagt wird.

## Patentansprüche

1. Geräuschgedämmtes Mischventil, insbesondere Einhebelmischer, mit in das Ventilgehäuse (1) eingesetzter Steuerkartusche (3),
die eine starr angeordnete Ventilsitzscheibe
(19) und mindestens eine darüber angeordnete Steuerscheibe aufweist, wobei im Ventilgehäuse (1) zwischen dem Gehäuseboden
(2) und der Ventilsitzscheibe (19) ein Geräuschdämmzwischenstück (5) angeordnet ist,
das einen Heißwasserzulaufkanal (6), einen
Kaltwasserzulaufkanal (7) und einen Ablaufkanal (8) aufweist, dadurch gekennzeichnet,
daß in den Wasserzulaufkanälen (6, 7) und/
oder im Wasserablaufkanal (8) des Geräuschdämmzwischenstückes (5) radial auffedernde Schlaucheinsätze (9) angeordnet und jeweils zumindest bereichsweise von einer
Luftkammer (13) umgeben sind.

2. Mischventil nach Anspruch 1, dadurch
gekennzeichnet, daß die Schlaucheinsätze (9)
aus kautschukelastischem Material bestehen.

3. Mischventil nach Anspruch 1, dadurch
gekennzeichnet, daß die Schlaucheinsätze (9)
abdichtende Stirnflächen (10) aufweisen.

4. Mischventil nach Anspruch 3, dadurch
gekennzeichnet, daß die Stirnflächen (10) als
Dichtringe (11) ausgebildet sind.

5. Mischventil nach Anspruch 1, dadurch
gekennzeichnet, daß die Schlaucheinsätze (9)
jeweils Ansätze (12) aufweisen, die eine Luftkammer (13) abdichten.

6. Mischventil nach Anspruch 1, dadurch
gekennzeichnet, daß die Schlaucheinsätze (9)
Abstützdorne (16) und/oder Abstützrippen (17)
aufweisen.

## Revendications

1. Soupape de mélange à amortisseur de
bruit, notamment mélangeur à levier unique, du
type comportant une cartouche de commande
(3) insérée dans la cage de soupape (1) et qui
possède un disque rigide de siège de soupape
(19) et au moins un disque de manoeuvre disposé audessus, et dans laquelle se trouve disposé au-dessus, et dans laquelle se trouve diset le disque de siège de soupape (19), une pièce
intermédiaire (5) amortissant le bruit, qui comporte une arrivée d'eau chaude (6), une arrivée
d'eau froide (7) et une sortie d'écoulement (8),
ladite soupape étant caractérisée en ce que,
dans les conduits d'arrivée d'eau (6, 7) et/ou
dans la sortie d'écoulement d'eau (8) de la
partie amortisseur de bruit (5), on prévoit des
garnitures de caoutchouc (9) aptes à s'élargir
élastiquement de façon radiale et dont chacune
est entourée d'au moins une chambre d'air (13).

2. Soupape selon la revendication 1, caractérisé en ce que les garnitures souples (9) sont
réalisées en matériau caoutchouteux élastique.

3. Soupape selon la revendication 1, caractérisée en ce que les garnitures (9) ont des faces
frontales (10) étanches.

4. Soupape selon la revendication 3, caractérisée en ce que les faces frontales (10) sont
conformées en bagues d'étanchéité (11).

5. Soupape selon la revendication 1, caractérisée en ce que les garnitures mde caoutchouc (9) présentent des épaulements (12) qui
assurent l'étanchéité avec une chambre d'air
(13).

6. Soupape selon la revendication 1, caractérisée en ce que les garnitures de caoutchouc
(9) présentent des ardillons (16) et/ou des
ailettes (17) jouant le rôle d'entretroises.

## Claims

1. A mixing valve with a noise reducing device, more specially in the form of a single lever mixing valve, comprising a control sleeve (3) seated in the valve housing (1), said sleeve (3) having a firmly locked valve seat washer (19) and at least one control washer placed over same, a noise reducing inbetween piece (5) being present in the valve housing (1) between the floor (2) of the housing and the valve seat washer (19), said piece (5) having an inlet duct (6) for hot water, an inlet duct (7) for cold water and an outlet (8) duct, characterized in there are radially springing hose inlays (9) placed in the water inlet ducts (6 and 7) and/or in the water outlet duct (8) of the noise reducing inbetween piece (5), there being an air space (13) placed round each such inlay (9) at least in places.

2. The mixing valve as claimed in claim 1 characterized in that the hose inlays (9) are made of rubber-like material.

3. The mixing valve as claimed in claim 1 characterized in that the hose inlays (9) have end faces (10) with sealing properties.

4. The mixing valve as claimed in claim 3 characterized in that the end faces (10) are in the form of gasket rings (11).

5. The mixing valve as claimed in claim 1 characterized in that the said hose inlays (9) each have shoulders (12), same sealing off an air space (13).

6. The mixing valve as claimed in claim 1 characterized in that the hose inlays (9) have support heads (16) and/or support fins (17).

Fig. 1

Fig. 2

## Fig. 3